# EUROPÄISCHE PATENTSCHRIFT

(11) **EP 1 271 790 B1**
(45) Veröffentlichungstag und Bekanntmachung des Hinweises auf die Patenterteilung: **08.11.2006**
(21) Anmeldenummer: 02010384.2
(22) Anmeldetag: 08.05.2002
(51) Int. Cl.: H04B 1/18

(54) **Funkempfänger**
Radio receiver
Récepteur radio

(30) Priorität: 29.06.2001 DE 10131456
(43) Veröffentlichungstag der Anmeldung: 02.01.2003
(73) Patentinhaber: ROBERT BOSCH GMBH, 70442 Stuttgart (DE)
(72) Erfinder: Kottschlag, Gerhard A., 31139 Hildesheim (DE); Pochowski, Lutz A., 31141 Hildesheim (DE)

(56) Entgegenhaltungen:
- US-A- 5 584 051
- LIEBSCHER U.A.: "Rundfunk-, Fernseh-, Tonspeichertechnik" 1981, VEB VERLAG TECHNIK , BERLIN , XP002293792 * Seite 327 - Seite 328 *

## Beschreibung

### Stand der Technik

Die Erfindung geht von einem Funkempfänger mit mindestens zwei Empfangsteilen, die an eine gemeinsame Empfangsantenne angeschlossen sind, wobei das Antennensignal mittels einer Signalaufteilung auf die mindestens zwei Empfangsteile aufgeteilt wird, nach der Gattung des unabhängigen Patentanspruchs aus.

Bei solchen auch als Mehrkanal-Funkempfänger bekannten Funkempfängern dienen die mindestens zwei Empfangsteile gewöhnlich der Verarbeitung über unterschiedliche Funkfrequenzen empfangener Informationen. So sind mit den mindestens zwei Rundfunkempfängern eines Mehrkanal-Rundfunkempfängers beispielsweise ein erstes Rundfunksignal, welches ein Rundfunkprogrammsignal enthält, und ein weiteres Rundfunksignal, welches beispielsweise in digitaler Form codierte Verkehrsinformationen enthält, verarbeitbar. Dazu wird das von der gemeinsamen Antenne aufgenommene Antennensignal, das gewöhnlich aus einer Überlagerung einer Mehrzahl von Rundfunksignalen besteht, einer Signalaufteilung, gemeinhin auch Splitter genannt,
zugeführt, die das Antennensignal gleichmäßig oder in einem festen Verhältnis auf die mindestens zwei Empfangsteile, auch Tuner genannt, aufteilt. Jedem Empfangsteil ist damit ein kleinerer Anteil des Antennensignals, also ein Antennensignal mit verringerter Amplitude gegenüber einer Auslegung mit einem jeden Empfangsteil zugeordneter separater Antenne, zugeführt.

Die US-A-5 584 051 offenbart einen Zweisystem-Rundfunkempfänger für DAB- und VHF-FM/AM-Rundfunk, bei dem zwei Empfangsteile über einen Splitter an eine gemeinsame Antenne angeschlossen oder anschließbar sind. Der Splitter 4 leitet das Empfangssignal der Antenne 1 zum DAB- oder zum VHF-FM/AM-Empfänger weiter. Alternativ kann das Empfangssignal auch an beide Empfänger weitergeleitet werden, in welchem Fall der Splitter auch entfallen kann. Es wird sodann entweder das VHF-FM/AM-Rundfunksignal demoduliert und wiedergegeben oder das DAB-Rundfunksignal. Das Ausgangssignal des jeweils anderen Empfangteils wird gemutet.

### Vorteile der Erfindung

Ein erfindungsgemäßer Funkempfänger mit den Merkmalen des unabhängigen Patentanspruchs hat den Vorteil, dass die Aufteilung des Antennensignals auf die mindestens zwei an eine gemeinsame Empfangsantenne angeschlossenen Empfangsteile veränderbar ist. Damit wird eine Anpassung der Aufteilung des Antennensignals auf die mindestens zwei Empfangsteile in Abhängigkeit von Anforderungen an die durch die Empfangsteile zu verarbeitenden und/oder verarbeiteten Antennensignale ermöglicht.

Dies ermöglicht eine verbesserte Ausnutzung des Antennensignals und damit ein insgesamt verbessertes Verhalten eines Funkempfängers.

Dazu ist ein Funkempfänger mit mindestens zwei Empfangsteilen, die an eine gemeinsame Empfangsantenne angeschlossen sind, wobei das Antennensignal mittels einer Signalaufteilung auf die mindestens zwei Empfangsteile aufgeteilt wird, derart ausgestaltet, dass eine Steuerung des Maßes der Aufteilung des Antennensignals auf die mindestens zwei Empfangsteile vorgesehen ist.

Eine erste Gruppe vorteilhafter Ausführungsformen der Erfindung richtet sich auf die Parameter, in deren Abhängigkeit die Steuerung der Signalaufteilung des Antennensignals auf die mindestens zwei Empfangsteile erfolgt.

Gemäß einer ersten vorteilhaften Ausführungsform der Erfindung ist es vorgesehen, dass die Signalaufteilung in Abhängigkeit die Empfangsqualitäten im Antennensignal enthaltener Funksignale repräsentierender Größen gesteuert wird.

Demgemäß wird das Teilungsverhältnis der Signalaufteilung vorzugsweise durch die Stärke, insbesondere die Empfangsfeldstärke, der empfangenen Funksignale gesteuert. So wird vorteilhafterweise dem Empfangsteil oder den Empfangsteilen, die ein starkes Funksignal verarbeiten, ein geringerer Anteil des Antennensignals zugeleitet, als einem solchen Empfangsteil oder solchen Empfangsteilen, die ein schwaches Funksignal verarbeiten.

Das Empfangsteil, das ein schwaches Funksignal auswerten soll, wird demzufolge von anderen Empfangsteilen möglichst wenig behindert, denn es erhält sein Signal fast ungedämpft von der Signalaufteilung. Demgegenüber wird für die Verarbeitung starker Funksignale nur ein kleiner Teil vom Antennensignal abgezweigt. Beim starken Funksignal fällt die relativ hohe Dämpfung, die sich durch einen kleinen Auskopplungsteil ergibt, weniger ins Gewicht, die Empfangsqualität wird hier kaum beeinträchtigt. Die Gesamtempfangsleistung des Systems wird somit gegenüber einem festen Aufteilungsverhältnis der Signalaufteilung entscheidend verbessert.

Gemäß einer vorteilhaften Realisierung der beschriebenen Ausführungsform ist es daher vorgesehen, dass eine Steuerung der Signalaufteilung in Abhängigkeit der Empfangsfeldstärke der im Antennensignal enthaltenen, interessierenden Funkfrequenzen bzw. Funksignale erfolgt.

Weiterhin ist es demgemäß von Vorteil, wenn eine Steuerung der Signalaufteilung umgekehrt dem Verhältnis der Empfangsqualitäten im Antennensignal enthaltener, interessierender Funkfrequenzen vorgesehen ist. Zur Beurteilung der Empfangsqualität einer im Antennensignal enthaltenen Funkfrequenz bzw. eines Funksignals muss nicht oder nicht nur notwendigerweise dessen Empfangsfeldstärke herangezogen werden. Vielmehr können vorteilhafterweise weitere Kriterien, wie beispielsweise eine Datenfehlerrate eines im interessieren Funksignal enthaltenen Datensignals oder andere Empfangsqualtitätskriterien, wie diese beispielsweise aus den Voranmeldungen der Blaupunkt-Werke GmbH, Hildesheim, DE-A-43 09 518, EP-B-642 716, EP-B-642 712, EP-B-642 713, bekannt sind, herangezogen werden.

Solche weiteren Qualitätskriterien sind beispielsweise die Datenfehlerrate eines neben dem Hörfunkprogramm über eine Rundfunkfrequenz übertragenen Radio-Daten- (RDS-) Signals, eine mögliche Asymmetrie der Seitenbänder eines 38kHz-Stereo-Hilfsträgers, der mit dem Hörfunkprogramm amplitudenmoduliert ist, oder ein Mehrwegeempfang anzeigendes Signal.

Eine weitere vorteilhafte Ausführungsform der Erfindung richtet sich darauf, dass die Steuerung der Signalaufteilung in Abhängigkeit von mittels im Antennensignal enthaltener Funksignale transportierter Informationsinhalte vorgesehen ist. Insbesondere ist es von Vorteil, dass im Falle eines zur Gewinnung in einem ersten Funksignal enthaltener Audiosignale vorgesehenen ersten Empfangsteil und eines weiteren, zur Gewinnung in einem zweiten Funksignal enthaltener Datensignale vorgesehenen Empfangsteil dem zur Gewinnung der Audiosignale vorgesehenen Empfangsteil ein höherer Anteil des Antennensignals zugeführt ist. So sind nämlich innerhalb eines Funksignals übertragene Audiosignale bekanntermaßen besonders störanfällig, Übertragungsfehler sind insbesondere im Falle analog übertragener Audiosignale, wie dies beispielsweise bei FM-Rundfunksignalen der Fall ist, schwer oder überhaupt nicht zu korrigieren. Demgegenüber werden im Rahmen von Rundfunksignalen übertragene Datensignale gewöhnlich mit Redundanzen übertragen, so dass auch im Falle einer störbehafteten Signalübertragung eine Rekonstruktion des korrekten Dateninhalts aufgrund der Redundanzen möglich ist. Demzufolge kann vorteilhafterweise zur Erzielung einer möglichst hohen Signalqualität dem Empfangsteil, welches zum Empfang des das Audiosignal tragenden Funksignals vorgesehen ist, ein besonders hoher Anteil des Antennensignals zugeführt werden, wohingegen dem anderen Empfangsteil, welches zum Empfang des das Datensignal tragenden Funksignals vorgesehen ist, ein kleinerer Anteil des Antennensignals zugeführt wird. Damit ergibt sich eine hohe Signalqualität für das Audiosignal und eine für eine Zurückgewinnung des Dateninhalts des übertragenen Datensignals ausreichende Signalstärke.

Eine weitere Ausführungsform der Erfindung richtet sich darauf, dass bei Wiedergabe eines mittels eines der Empfangsteile empfangenen Funk-Audiosignals in einer störgeräuschbehafteten Umgebung eine hohe Qualität des Audiosignals nicht erforderlich ist, da Störungen innerhalb des wiedergegebenen Audiosignals infolge der störgeräuschbehafteten Umgebung ohnehin nicht hörbar sind. Demzufolge ist gemäß einer vorteilhaften Ausführungsform der Erfindung vorgesehen, dass bei einem Funkempfänger, bei dem eines der mindestens zwei Empfangsteile zur Gewinnung in einem ersten Funksignal enthaltener Audiosignale, ein zweites der mindestens zwei Empfangsteile zur Gewinnung in einem zweiten Funksignal enthaltener Datensignale vorgesehen ist, dem zur Gewinnung der Audiosignale vorgesehenen Empfangsteil ein Anteil des Antennensignals in Abhängigkeit eines in einem Wiedergaberaum, in dem das Audiosignal wiedergegeben wird, herrschenden Umgebungsgeräuschs zugeführt ist. Demzufolge kann der dem zweiten Empfangsteil zugeführte Anteil des Antennensignals auf Kosten des dem ersten Empfangsteil zugeführten Anteils des Antennensignals zur Erhöhung der Empfangssicherheit des Datensignals erhöht werden, ohne dass sich dies für einen Hörer des Audiosignals störend bemerkbar machen würde.

Den vorstehend beschriebenen Ausführungsformen ist somit gemeinsam, dass vorteilhafterweise die Steuerung der Signalaufteilung eines Antennensignals auf mindestens zwei Empfangsteile in Abhängigkeit von an durch die Empfangsteile verarbeiteten oder zu verarbeitenden Funksignale gestellten Anforderungen zur Optimierung eines Gesamtverhaltens des Funkempfängers steuerbar ist.

Eine weitere Ausführungsform der Erfindung richtet sich auf die konkrete Ausgestaltung der Signalaufteilung.

Diese ist vorteilhafterweise in Form einer Spule ausgeführt, wobei die Antenne und die mindestens zwei Empfangsteile an verschiedenen Abgriffen der Spule angeordnet sind und wobei das Maß der Signalaufteilung durch Verbindung einzelner, von den Anschlussabgriffen für die Antenne und die Empfangsteile verschiedener, Abgriffe der Spule mit einem Bezugspotential steuerbar ist.

Gegenüber einer ebenfalls im Bereich der Erfindung liegenden Anordnung eines Umschalters im Signalpfad zwischen Antenne und den Empfangsteilen hat die beschriebene bevorzugte Ausführunngsform den Vorteil, dass sich durch eine nicht lineare Kennlinie der Schalter verursachte Störungen nicht oder nur in sehr geringem Umfang auf das den Empfangsteilen zugeführte Antennensignal auswirken.

### Zeichnungen

Ausführungsbeispiele der Erfindung sind in den Figuren dargestellt und werden nachfolgend näher erläutert.

### Es zeigen

Figur 1 ein vereinfachtes Blockschaltbild des erfindungserheblichen Teils eines erfindungsgemäßen Funkempfängers mit einer ersten Ausführungsform einer erfindunsgemäßen steuerbaren Signalaufteilung,
Figur 2 ein zweiten Ausführungsbeispiel einer erfindungsgemäßen steuerbaren Signalaufteilung,
Figur 3 ein drittes Ausführungsbeispiel einer erfindungsgemäßen steuerbaren Signalaufteilung und
Figur 4 ein viertes Ausführungsbeispiel einer erfindungsgemäßen steuerbaren Signalaufteilung.

### Beschreibung der Ausführungsbeispiele

Ein erfindungsgemäßer Funkempfänger wird nachfolgend am Beispiel eines Rundfunkempfängers mit zwei an eine gemeinsame Empfangsantenne angeschlossenen Empfangsteilen beschrieben. Dies ist jedoch keineswegs im Sinne einer Einschränkung auf Rundfunkempfänger zu verstehen, vielmehr eignet sich die Erfindung prinzipiell für jegliche Funkempfänger mit mehreren, an eine gemeinsame Antenne angeschlossenen Empfangsteilen.

Der Funkempfänger 1 verfügt über eine Empfangsantenne 10 zum Empfang an einem Empfängerstandort verfügbarer Rundfunksignale. Im vorliegenden Fall liegen am Empfängerstandort mindestens zwei voneinander verschiedene Rundfunksignale 18 und 19 vor, bei denen es sich um durch zu übertragende Signale modulierte Trägerfrequenzen handelt.

Am Ausgang der Empfangsantenne 10 ist eine Überlagerung der am Empfängerstandort verfügbaren Rundfunksignale, im vorliegenden Fall also der Rundfunksignale 18 und 19, abnehmbar. Das aus einem Rundfunkfrequenzgemisch bestehende Antennensignal der Empfangsantenne 10 ist über eine steuerbare Signalaufteilung 15, nachfolgend auch Splitter genannt, einem ersten Empfangsteil 11 und einem zweiten Empfangsteil 12 des Rundfunkempfängers 1 zugeführt. Erstes Empfangsteil 11 und zweites Empfangsteil 12 verfügen in an sich bekannter Weise über die zur Isolierung eines bestimmten Rundfunksignals aus dem Antennensignal erforderlichen Mittel, ebenso wie zu deren Herabmischung in eine Zwischenfrequenzebene und deren nachfolgende Demodulation zur Gewinnung der den Rundfunk-Trägerfrequenzen aufmodulierten Informationen, wie beispielsweise eines Rundfunk-Programmsignals, also eines Audiosignals, im Falle des ersten Empfangsteils und eines einer Rundfunkfrequenz aufmodulierten Datensignals, wie beispielsweise des RDS-Signals, wie in "specifications of the radio data system RDS for vhf/FM sound broadcasting", Tech. 32 44-E European Broadcasting Union, technical center, Brüssel, BE, März 1984 spezifiziert, erforderlichen Mittel. Das an einem ersten Ausgang 111 des ersten Empfangsteils 11 anstehende, durch Selektion und Demodulation beispielsweise des ersten Rundfunksignals 18 gewonnene Rundfunk-Audiosignal ist einer Wiedergabevorrichtung 13, die in an sich bekannter Weise über die zur Wiedergabe ihr zugeführter Audiosignale erforderlichen Mittel, wie insbesondere eine Klang- und/oder Lautstärkebeeinflussung, desweiteren NF-Verstärkerstufe und mindestens einen daran angeschlossenen Lautsprecher verfügt, zugeführt, und wird von dieser in einem Wiedergaberaum, im vorliegenden Fall eines Autoradios in einer Fahrgastzelle eines Kraftfahrzeugs, wiedergegeben. Das an einem ersten Ausgang 121 des zweiten Empfangsteils 12 abnehmbare Radio-Daten-Signal, das durch Selektion und Demodulation beispielsweise des zweiten Rundfunksignals 19 mittels des zweiten Empfangsteils 12 gewonnen worden ist, ist einem RDS-Decoder 14 zur weiteren Auswertung in an sich bekannter Weise zugeführt.

Sowohl erstes, als auch zweites Empfangsteil 11, 12 verfügen jeweils über einen zweiten Ausgang 112 und 122, an denen ein die Empfangsqualität des durch sie jeweils empfangenen Rundfunksignals, im vorliegenden Fall die Amplitude des durch Herabmischung in die Zwischenfrequenzebene aus der Rundfunkfrequenz 18 gewonnenen Zwischenfrequenz- (ZF-) Signals im Falle des ersten Empfangsteils 11 und der ZF-Amplitude des zweiten Rundfunksignals 19 im Falle des zweiten Empfangsteils 12, abnehmbar ist. Die ZF-Amplituden stellen ein die Empfangsfeldstärke der mit den betreffenden Empfangsteilen empfangenen Rundfunksignale 18, 19 anzeigendes Signal und mithin ein die Empfangsqualität der empfangenen Rundfunksignale 18, 19 anzeigendes Signal dar. Die an den zweiten Ausgängen 112 und 122 des ersten und des zweiten Empfängers 11, 12 abnehmbaren, die Empfangsqualität der empfangenen Rundfunksignale anzeigenden Qualitätssignale sind einer im Anschluss an die nachfolgende Beschreibung der Signalaufteilung 15 näher erläuterten Steuerung 16 zur Steuerung der steuerbaren Signalaufteilung 15 zugeführt.

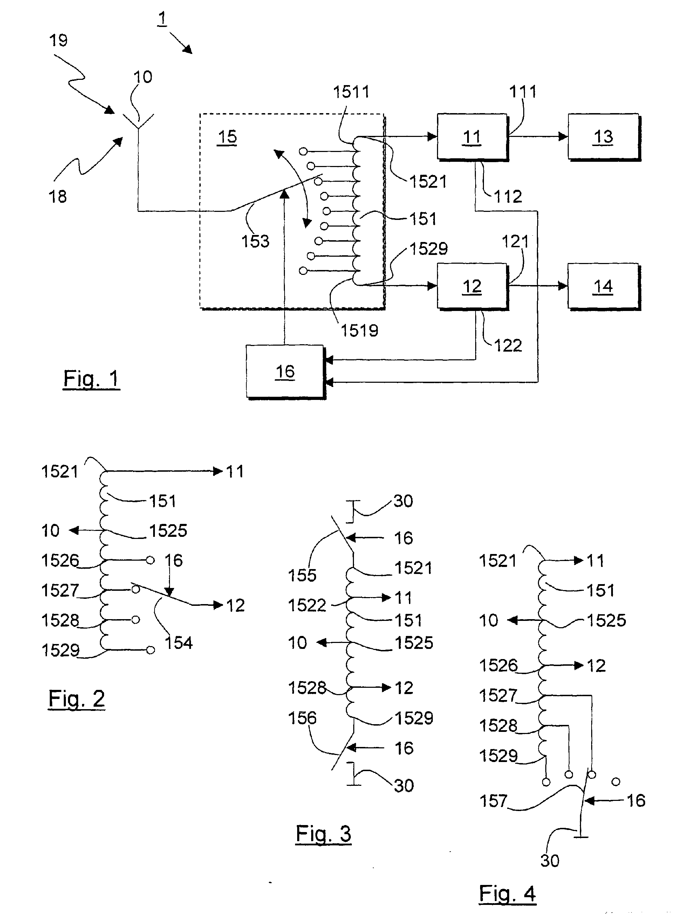

Die Signalaufteilung 15 besteht gemäß dem Ausführungsbeispiel der Figur 1 aus einer Spule 151 mit Windungen 1511 bis 1519 und zwischen den einzelnen Windungen oder jeweils einer Anzahl von Windungen angeordneten Abgriffen 1521 bis 1529. Der erste Abgriff 1521 der Spule 151 ist mit dem Eingang des ersten Empfangsteils verbunden, ebenso ist der letzte Abgriff 1529 der Spule 151 mit dem Eingang des zweiten Empfangsteils 12 verbunden. Ein Kontakt eines Schalters 153, an dem das Antennensignal der Antenne 10, und damit das Rundfunkfrequenzgemisch am Empfängerstandort anliegt, ist nach Maßgabe eines von der Steuerung 16 erzeugten Steuersignals mit einem der zwischen dem ersten und dem letzten Abgriff 1511 und 1519 der Spule 151 gelegenen Abgriffe der Spule 151 wahlweise verbindbar. Je nach Stellung des Kontakts des Wahlschalters 153 ist somit das Antennensignal der Antenne 10 einem Abgriff der Spule 151 zugeführt.

Entsprechend der Stellung des Kontakts des Wahlschalters 153 ergibt sich ein unterschiedliches Windungsverhältnis und damit ein unterschiedlicher Ankopplungsfaktor für die Ankopplung des ersten bzw. zweiten Empfangsteils 11 bzw. 12 an das Antennensignal der Antenne 10. Demgemäß wird dem ersten Empfangsteil 11 ein erster Anteil des Antennensignals, dem zweiten Empfangsteil 12 ein zweiter Anteil des Antennensignals zugeführt, wobei die den Empfangsteilen zugeführten Anteile des Antennensignals am Antennensignal nach Maßgabe der Stellung des Kontakts des Wahlschalters 153 veränderbar sind.

Bei einer ersten, in Figur 2 dargestellten, alternativen Ausführungsform der Signalaufteilung 15 besteht diese wiederum aus einer Spule 151 mit einer Mehrzahl von Windungen, wobei ein erster Abgriff 1521 mit dem Eingang des ersten Empfangsteils 11 verbunden ist, wobei weiterhin ein Mittelabgriff 1525 der Spule 151 fest mit der Antenne 10 verbunden ist, und wobei weitere Abgriffe 1526, 1527, 1528 und 1529 wahlweise mittels eines Wahlschalters 154, der nach Maßgabe eines von der Steuerung 16 erzeugten Steuersignals gesteuert wird, mit dem Eingang des zweiten Empfangsteils verbindbar ist. Der Mittelabgriff 1525 ist dabei nicht notwendiger Weise in der elektrischen Mitte der Spule angeordnet, sondern kann auch außermittig, jedoch sowohl dem ersten Abgriff 1521, als auch dem ersten weiteren Abgriff 1526 der Spule 151 benachbart angeordnet sein.

Während bei den bisher beschriebenen Ausführungsformen der Signalaufteilung davon ausgegangen wurde, dass ein Wahlschalter, oder allgemeiner ein Schalter 153 und 154 im Signalweg zwischen Antenne und mindestens einem der Empfangsteile angeordnet ist, richtet sich eine weitere Gruppe von Ausführungsformen auf eine Signalaufteilung 15, bei der eben diese Schalter bzw. Umschalter im Signalpfad vermieden werden.

Eine erste Ausführungsform der Signalaufteilung mit außerhalb des Signalpfads angeordneter Umschaltung ist in Figur 3 dargestellt. Die Signalaufteilung gemäß Figur 3 verfügt über eine Spule 151 mit einer Mehrzahl von Windungen, wobei die Enden der Spule jeweils über einen Schalter 155 und 156 nach Maßgabe von der Steuerung 16 erzeugter Steuersignale mit einem Bezugspotential 30, im vorliegenden Fall, Masse, verbindbar sind. Einem Mittelabgriff 1525, der nicht notwendigerweise exakt in der Mitte der Spule 151 angeordnet sein muss, ist das Antennensignal von der Antenne 10 zugeführt. An einem zweiten Abgriff 1522, der zwischen erstem Abgriff 1521 und Mittelabgriff 1525 angeordnet ist, ist mit dem Eingang des ersten Empfangsteils 11 verbunden. Weiterhin ist ein vorletzter Abgriff 1528, der zwischen letztem Abgriff 1529 und Mittelabgriff 1525 angeordnet ist, mit dem Eingang des zweiten Empfangsteils 12 verbunden.

Bei der beschriebenen Ausführungsform der Signalumschaltung ist durch wahlweises Schließen eines der Schalter 155 oder 156 oder auch durch Belassen beider Schalter in geöffneter Stellung die Ankopplung der beiden Empfangsteile 11 und 12 an das Antennensignal 10 nach Maßgabe von der Steuerung 16 erzeugter Steuersignale veränderbar.

Eine weitere Ausführungsform der Signalaufteilung 15 ist in Figur 4 dargestellt.

Bei der in Figur 4 dargestellten Ausführungform der Signalaufteilung 15 besteht auch diese wieder aus einer Spule 151, an deren ersten Abgriff 1521, der am ersten Ende der Spule 151 angeordnet ist, der Eingang des ersten Empfangsteils 11 angeschlossen ist. Einem Mittelabgriff 1525, der nicht notwendig in der Mitte der Spule angeordnet sein muss, ist das Antennensignal von der Antenne 10 zugeführt. Ein letzter Abgriff 1529, ein diesem benachbarter vorletzter Abgriff 1528 und ein drittletzter, dem vorletzten Abgriff benachbarter Abgriff 1527 sind nach Maßgabe eines von der Steuerung erzeugten Steuersignals über einen Wahlschalter 157 mit einem gemeinsamen Bezugspotential 30, vorzugsweise Masse, verbindbar.

An einen dritten Abgriff 1526, der zwischen Mittelabgriff 1525 und drittletztem Abgriff 1527 der Spule angeordnet ist, ist das zweite Empfangsteil 12 des Funkempfängers angeschlossen. Durch Erdung des drittletzten, des vorletzten oder des letzten Abgriffs nach Maßgabe eines von der Steuerung 16 erzeugten Steuersignals ist ein mehr oder weniger großer Teil der Spule 151 deaktivierbar, und damit das Windungsverhältnis der Spule beeinflussbar. Dementsprechend sind die dem ersten Empfangsteil 11 und dem zweiten Empfangsteil 12 zugeführten Anteile des Antennensignals beeinflussbar.

Gemäß dem in Figur 1 dargestellten Ausführungsbeispiel der Erfindung sind der Steuerung 16 die Pegel des durch Herabmischung in die Zwischenfrequenzebene gebildeten Zwischenfrequenz-Signals des ersten Empfangsteils 11 und des zweiten Empfangsteils 12, die jeweils an deren zweitem Ausgang 112 und 122 anstehen, zugeführt. Die ZF-Pegel sind ein Maß für die Empfangsfeldstärke der mittels des ersten und des zweiten Empfangsteils selektierten und damit empfangenen Rundfunksignale. Für den vorstehend beschriebenen Fall, dass mittels des ersten Empfangsteils das erste Rundfunksignal 18 selektiert und empfangen wird, steht mithin am zweiten Ausgang 112 des ersten Empfangsteils 11 der ZF-Pegel des durch die Signalaufteilung 15 gedämpften ersten Rundfunksignals 18 zur Verfügung. Analog steht am zweiten Ausgang 122 des zweiten Empfangsteils der ZF-Pegel des durch die Signalaufteilung 15 ebenfalls gedämpften, mittels des zweiten Empfangsteils empfangenen zweiten Rundfunksignals 19 zur Verfügung.

In einer ersten Ausführungsform der Steuerung 16 ist diese derart ausgelegt, dass sie den Schaltkontakt des Wahlschalters 153 derart verstellt, dass sich infolge einer entsprechenden Ankopplung des ersten und des zweiten Empfangsteils 11 und 12 an das Antennensignal der Antenne 10 an den zweiten Ausgängen 112 und 122 des ersten und des zweiten Empfangsteils 11 und 12 im wesentlichen der gleiche ZF-Pegel einstellt. Somit stehen aufgrund einer entsprechenden Ansteuerung der Signalaufteilung 15 das erste Rundfunksignal 18 am Eingang des ersten Empfangsteils 11 mit derselben Empfangssignalfeldstärke zur Verfügung, wie das zweite Rundfunksignal 19 am Eingang des zweiten Empfangsteils 12. Liegt beispielsweise das Rundfunksignal 18 am Empfängerstandort mit einer gegenüber der des zweiten Rundfunksignals 19 geringeren Empfangsfeldstärke vor, wird die Signalaufteilung 15 derart angesteuert, dass dem ersten Empfangsteil 11 das erste Rundfunksignal mit einer möglichst geringen Dämpfung zugeführt wird, wohingegen für das zweite Rundfunksignal 19, das durch das zweite Empfangsteil 12 verarbeitet wird, eine vergleichsweise hohe Dämpfung zugunsten des ersten Rundfunksignals 18 in Kauf genommen wird. Somit können die in den Rundfunksignalen 18 und 19 enthaltenen Informationen in den beiden Empfangsteilen 11 und 12 mit näherungsweise der gleichen Empfangsfeldstärke verarbeitet werden, wodurch sich erwartungsgemäß am Ausgang der beiden Empfangsteile 11 und 12 Informationssignale mit näherungsweise der gleichen Fehlerrate einstellen.

In der praktischen Anwendung kann vorzugsweise vorgesehen sein, daß ein Signal soweit abgesenkt wird, daß es gerade noch fehlerfrei empfangen werden kann bzw. noch Fehlerkorrekturen eines digitalen Signals möglich sind, während der verbleibende Rest des Signals dem zweiten Empfänger zugeführt wird.

Im Falle eines Schalters 153 mit beispielsweise fünf möglichen Schalterstellungen und einer entsprechenden Anzahlen von Abgriffen der Spule 151, die den Schalterstellungen zugeordnet sind, können sinnvolle Aufteilungsstufen des Antennensignals beispielsweise sein.

| | Empfangsteil 11 | Empfangsteil 12 |
|---|---|---|
| Schalterstellung 1 | -0,25dB (= 95%) | -13dB (= 5%) |
| Schalterstellung 2 | -1dB (= 80%) | -7dB (= 20%) |
| Schalterstellung 3 | -3dB (= 50%) | -3dB (= 50%) |
| Schalterstellung 4 | -7dB (= 20%) | -1dB (= 80%) |
| Schalterstellung 5 | -13dB (= 5%) | -0,25dB (= 95%) |

Gemäß alternativer Ausführungsformen der Steuerung 16 kann diese derart ausgebildet sein, dass andere Kriterien als die oben genannten oder auch andere Kriterien als die oben genannten in Verbindung mit den oben genannten Kriterien im Sinne einer geeigneten Gewichtung zur Steuerung des Teilungsverhältnisses und damit der Ankopplung der Empfangsteile 11 und 12 an das Antennensignal herangezogen werden.

Wird beispielsweise mittels des ersten Empfangsteils 11 ein Rundfunksignal 18 ausgewertet, das mittels der Wiedergabevorrichtung 13 wiederzugebende Audiosignale transportiert, und werden beispielsweise aus dem mittels des zweiten Empfangsteils 12 ausgewerteten zweiten Rundfunksignal nur dessen RDS-Informationen mittels der RDS-Auswertung 14 ausgewertet, kann die Steuerung vorzugsweise derart ausgestaltet sein, dass sie die Audiosignalverarbeitung priorisiert, also für das erste Empfangsteil 11 einen höheren Ankopplungsgrad an das Antennensignal einstellt, als für den zweiten Empfänger, der zur Auswertung der Datensignale vorgesehen ist. Dem liegt die Überlegung zugrunde, dass sich Fehler in der Audiosignalübertragung im wiederzugebenden Audiosignal störbar bemerkbar machen, wohingegen Fehler bei der Datenübertragung aufgrund einer üblicherweise vorhandenen Redundanz, im Falle des RDS-Signals beispielsweise durch zyklische Wiederholung bestimmter Informationen und des weiteren durch einen fehlerkorrigierenden Code, relativ leicht und in weiten Grenzen korrigieren lassen. Demzufolge genügt zum Empfang von Datensignalen mittels des zweiten Empfangsteils 12 eine vergleichsweise geringe Empfangssignalfeldstärke, wohingegen für den Empfang von Audiosignalen mittels des ersten Empfangsteils 11 eine hohe Empfangssignalfeldstärke und damit eine geringe Fehlerrate erforderlich sind.

Weiterhin können auch Umgebungsfaktoren durch die Steuerung 16 zur Steuerung der Signalaufteilung 15 berücksichtigt werden. Diese Weiterbildung geht von der Überlegung aus, dass beispielsweise bei Wiedergabe eines Audiosignals innerhalb einer Fahrgastzelle eines Kraftfahrzeugs, welches sich mit hoher Geschwindigkeit bewegt, aufgrund des in der Fahrgastzelle herrschenden hohen Störgeräuschpegels eine exakte Wiedergabe des Audiosignals nicht vonnöten ist. Demzufolge kann für diesen Fall, beispielsweise in Abhängigkeit des tatsächlich im Fahrzeuginnenraum herrschenden Störgeräuschpegels, der beispielsweise mittels eines im Fahrzeuginnenraum installierten Mikrophons erfasst werden kann, eine geringere Ankopplung des ersten Empfangsteils an das Antennensignal vorgesehen werden, als in dem davor beschriebenen Fall, in dem davon ausgegangen wurde, dass das Audiosignal möglichst ungestört wiedergegeben werden soll. Demzufolge kann die Ankopplung des ersten Empfangsteils und des zweiten Empfangsteils 12 bei zunehmendem Störgeräuschpegel im Fahrzeuginnenraum zunehmend zugunsten des zweiten Empfangsteils 12 verschoben werden, so dass bei hohem Störgeräuschpegel beispielsweise das erste Empfangsteil 11 den gleichen Anteil des Antennensignals erhält, wie das zweite Empfangsteil 12. Statt einer Messung des tatsächlich im Fahrzeuginnenraum vorhandenen Störgeräuschs mittels Mikrophonen kann auch die Verwendung von Radsensoren, die eine Radumdrehungszahl des Fahrzeugs messen, zur Steuerung der Signalaufteilung in der beschriebenen Art und Weise herangezogen werden.

## Patentansprüche

1. Funkempfänger (1) mit mindestens zwei Empfangsteilen (11, 12), die an eine gemeinsame Empfangsantenne (10) angeschlossen sind, und Mitteln zur
Signalaufteilung (15) des Antennensignals auf die mindestens zwei Empfangsteile (11, 12),
**gekennzeichnet durch**
ein Mittel zur Steuerung (16) des Maßes der Aufteilung des Antennensignals auf die mindestens zwei Empfangsteile (11, 12).

2. Funkempfänger (1) nach Anspruch 1, **dadurch gekennzeichnet daß** das Mittel zur Steuerung der Signalaufteilung (16) eingerichtet ist, die Signalaufteilung in Abhängigkeit von Anforderungen an die **durch** die Empfangsteile (11, 12) zu verarbeitenden und/oder verarbeiteten Antennensignale zu steuern.

3. Funkempfänger (1) nach Anspruch 2, **dadurch gekennzeichnet daß** das Mittel zur Steuerung (16) der Signalaufteilung eingerichtet ist, die Signalaufteilung in Abhängigkeit von Empfangsqualitäten im Antennensignal enthaltener Funksignale repräsentierender Größen zu steuern.

4. Funkempfänger (1) nach Anspruch 3, **dadurch gekennzeichnet daß** das Mittel zur Steuerung (16) der Signalaufteilung eingerichtet ist, um das Antennensignal umgekehrt dem Verhältnis der Empfangsqualitäten im Antennensignal enthaltener, interessierender Funkfrequenzen aufzuteilen.

5. Funkempfänger nach einem der Ansprüche 3 oder 4, **dadurch gekennzeichnet daß** das Mittel zur Steuerung (16) der Signalaufteilung eingerichtet ist, die Signalaufteilung in Abhängigkeit der Empfangsfeldstärke der im Antennensignal enthaltenen, interessierenden Funkfrequenzen zu steuern.

6. Funkempfänger (1) nach Anspruch 1 oder 2, **dadurch gekennzeichnet daß** das Mittel zur Steuerung (16) der Signalaufteilung eingerichtet ist, die Signalaufteilung in Abhängigkeit von mittels im Antennensignal enthaltener Funksignale transportierter Informationsinhalte zu steuern.

7. Funkempfänger (1) nach Anspruch 6, **dadurch gekennzeichnet, daß** eines (11) der mindestens zwei Empfangsteile (11, 12) zur Gewinnung in einem ersten Funksignal enthaltener Audiosignale, ein anderes (12) der mindestens zwei Empfangsteile (11, 12) zur Gewinnung in einem zweiten Funksignal enthaltener Datensignale vorgesehen ist, und daß das Mittel zur Steurung der Signalaufteilung (16) eingerichtet ist, um dem zur Gewinnung der Audiosignale vorgesehenen Empfangsteil (11) einen höheren Anteil des Antennensignals zuzuführen.

8. Funkempfänger (1) nach Anspruch 6 oder 7, **dadurch gekennzeichnet, daß** eines der mindestens zwei Empfangsteile (11, 12) zur Gewinnung in einem ersten Funksignal enthaltener Audiosignale, ein zweites der mindestens zwei Empfangsteile (11, 12) zur Gewinnung in einem zweiten Funksignal enthaltener Datensignale vorgesehen ist, und daß das Mittel zur Steurung der Signalaufteilung (16) eingerichtet ist, um dem zur Gewinnung der Audiosignale vorgesehenen Empfangsteil (11) ein Anteil des Antennensignals in Abhängigkeit eines in einem Wiedergaberaum, in dem das Audiosignal wiedergegeben wird, herrschenden Umgebungsgeräuschs zuzuführen.

9. Funkempfänger (1) nach einem der vorhergehenden Ansprüche, **dadurch gekennzeichnet, daß** die Signalaufteilung (15) in Form einer Spule (151) ausgeführt ist, wobei die Antenne (10) und die mindestens zwei Empfangsteile (11, 12) an verschiedenen Abgriffen (1521, 1525, 1526) der Spule (151) angeordnet sind, und wobei das Maß der Signalaufteilung durch Verbindung einzelner, von den Anschlußabgriffen für die Antenne (10) und die Empfangsteile (11, 12) verschiedenen, Abgriffe (1527, 1528, 1529) der Spule (151) mit einem Bezugspotential (30) steuerbar ist.

10. Funkempfänger (1) nach einem der Ansprüche 1 bis 8, **dadurch gekennzeichnet, daß** die Signalaufteilung (15) in Form einer Spule (151) ausgeführt ist, wobei die mindestens zwei Empfangsteile (11, 12) an verschiedenen Abgriffen (1521, ... , 1529) der Spule (151) angeordnet sind, und wobei das Maß der Signalaufteilung durch Verbindung der Antenne (10) mit einem bestimmten von mehreren Anschlußabgriffe der Spule (151), der vorzugsweise von den Abgriffen (1521, 1529) für die Empfangsteile (11, 12) verschieden ist, steuerbar ist.

11. Funkempfänger (1) nach einem der Ansprüche 1 bis 8, **dadurch gekennzeichnet, daß** die Signalaufteilung (15) in Form einer Spule (151) ausgeführt ist, wobei die Antenne (10) und die mindestens zwei Empfangsteile (11, 12) an verschiedenen Abgriffen (1525, 1521, 1526, 1527, 1528, 1529) der Spule (151) angeordnet sind, und wobei das Maß der Signalaufteilung durch Verbindung eines der mindestens zwei Empfangsteile (12) mit einem bestimmten von mehreren Anschlußabgriffen (1526, 1527, 1528, 1529) der Spule (151), der vorzugsweise von den Abgriffen (1521, 1525) für Antenne (10) und erstes Empfangsteil (1525) verschieden ist, steuerbar ist.

## Claims

1. Radio receiver (1) with at least two reception components (11, 12), which are connected to a common reception antenna (10), and means for signal distribution (15) of the antenna signal among the at least two reception components (11, 12),
**characterized by**
a means to control (16) the extent of the distribution of the antenna signal among the at least two reception components (11, 12).

2. Radio receiver (1) according to Claim 1, **characterized in that** the means to control the signal distribution (16) is set up to control the signal distribution depending on requirements for the antenna signals to be processed and/or having been processed by the reception components (11, 12).

3. Radio receiver (1) according to Claim 2, **characterized in that** the means to control (16) the signal distribution is set up to control the signal distribution depending on parameters representing reception qualities of radio signals contained in the antenna signal.

4. Radio receiver (1) according to Claim 3, **characterized in that** the means to control (16) the signal distribution is set up to distribute the antenna signal inversely in relation to the reception qualities of relevant radio frequencies contained in the antenna signal.

5. Radio receiver (1) according to one of Claims 3 or 4, **characterized in that** the means to control (16) the signal distribution is set up to control the signal distribution depending on the reception field strength of the relevant radio frequencies contained in the antenna signal.

6. Radio receiver (1) according to Claim 1 or 2, **characterized in that** the means to control (16) the signal distribution is set up to control the signal distribution depending on the information content transported by means of radio signals contained in the antenna signal.

7. Radio receiver (1) according to Claim 6, **characterized in that** one (11) of the at least two reception components (11, 12) is provided to extract audio signals contained in a first radio signal, another (12) of the at least two reception components (11, 12) is provided to extract data signals contained in a second radio signal, and that the means to control the signal distribution (16) is set up to feed a higher proportion of the antenna signal to the reception component (11) provided in order to extract the audio signals.

8. Radio receiver (1) according to Claim 6 or 7, **characterized in that** one of the at least two reception components (11, 12) is provided to extract audio signals contained in a first radio signal, a second of the at least two reception components (11, 12) is provided to extract data signals contained in a second radio signal, and the means to control the signal distribution (16) is set up in order to feed a portion of the antenna signal to the reception component (11) provided to extract the audio signals depending on an ambient noise prevailing in a reproduction area in which the audio signal is reproduced.

9. Radio receiver (1) according to one of the preceding claims, **characterized in that** the signal distribution (15) is designed in the form of a coil (151), whereby the antenna (10) and the at least two reception components (11, 12) are arranged on different taps (1521, 1525, 1526) of the coil (151), and whereby the extent of the signal distribution can be controlled by the connection of individual taps (1527, 1528, 1529) of the coil (151), differing from the connection taps for the antenna (10) and the reception components (11, 12) to a reference potential (30).

10. Radio receiver (1) according to one of Claims 1 to 8, **characterized in that** the signal distribution (15) is designed in the form of a coil (151), whereby the at least two reception components (11, 12) are arranged on different taps (1521, ..., 1529) of the coil (151), and whereby the extent of the signal distribution can be controlled by the connection of the antenna (10) to a specific of a plurality of connection taps of the coil (151), which is preferably different from the taps (1521, 1529) for the reception components (11, 12).

11. Radio receiver (1) according to one of Claims 1 to 8, **characterized in that** the signal distribution (15) is designed in the form of a coil (151), whereby the antenna (10) and the at least two reception components (11, 12) are arranged on different taps (1525, 1521, 1526, 1527, 1528, 1529) of the coil (151), and whereby the extent of the signal distribution can be controlled by the connection of one of the at least two reception components (12) to a specific of a plurality of connection taps (1526, 1527, 1528, 1529) of the coil (151), which is preferably different from the taps (1521, 1525) for the antenna (10) and the first reception component (11).

## Revendications

1. Récepteur radio (1) comportant au moins deux parties de réception (11, 12) raccordées à une antenne réceptrice commune (10) et des moyens de répartition (15) du signal d'antenne sur au moins deux parties de réception (11, 12),
**caractérisé par**
un moyen de commande (16) de la taille de la répartition du signal d'antenne sur au moins deux parties de réception (11, 12).

2. Récepteur radio (1) selon la revendication 1,
**caractérisé en ce que**
le moyen de commande (16) de la répartition de signaux est réglé pour commander la répartition de signaux en fonction d'exigences concernant les signaux d'antenne à traiter et/ou traités par les parties de réception (11, 12).

3. Récepteur radio (1) selon la revendication 2,
**caractérisé en ce que**
le moyen de commande (16) de la répartition de signaux est réglé pour commander la répartition de signaux en fonction de qualités de réception des grandeurs représentant des signaux radio reçus dans le signal d'antenne.

4. Récepteur radio (1) selon la revendication 3
**caractérisé en ce que**
le moyen de commande (16) de la répartition de signaux est réglé pour répartir le signal d'antenne inversement au rapport des qualités de réception des fréquences radio intéressantes contenues dans le signal d'antenne.

5. Récepteur radio selon au moins l'une quelconque des revendications 3 ou 4,
**caractérisé en ce que**
le moyen de commande (16) de la répartition de signaux est réglé en fonction de l'intensité du champ de réception des fréquences radio intéressantes contenues dans le signal d'antenne.

6. Récepteur radio (1) selon la revendication 1 ou 2,
**caractérisé en ce que**
le moyen de commande (16) de la répartition de signaux est réglé pour commander la répartition de signaux en fonction de contenus d'information transportés au moyen de signaux radio contenus dans le signal d'antenne.

7. Récepteur radio (1) selon la revendication 6,
**caractérisé en ce qu'**
une (11) des deux parties de réception (11, 12) est prévue pour obtenir des signaux audio contenus dans un premier signal radio, une autre (12) des deux parties de réception (11, 12) pour obtenir des signaux de données contenus dans un deuxième signal radio, et le moyen de commande (16) de la répartition de signaux est réglé pour acheminer une plus grande proportion du signal d'antenne vers la partie de réception (11) prévue pour obtenir les signaux audio.

8. Récepteur radio (1) selon la revendication 6 ou 7,
**caractérisé en ce qu'**
une des deux parties de réception (11, 12) est prévue pour obtenir des signaux audio contenus dans un premier signal radio, une deuxième des deux parties de réception (11, 12) pour obtenir des signaux de données contenus dans un deuxième signal radio, et le moyen de commande (16) de la répartition de signaux est réglé pour acheminer vers la partie de réception (11) prévue pour obtenir les signaux audio une proportion du signal d'antenne en fonction d'un bruit environnant régnant dans une chambre de reproduction dans laquelle le signal audio est reproduit.

9. Récepteur radio (1) selon l'une quelconque des revendications précédentes,
**caractérisé en ce que**
la répartition de signaux (15) est réalisée sous forme de bobine (151), l'antenne (10) et les deux parties de réception (11, 12) étant disposées sur différentes prises (1521, 1525, 1526) de la bobine (151), et la taille de la répartition de signaux est commandée en reliant diverses prises (1527, 1528, 1529) de la bobine (151), différentes des branchements de l'antenne (10) et des parties de réception (11, 12), à un potentiel de référence (30).

10. Récepteur radio (1) selon l'une quelconque des revendications 1 à 8,
**caractérisé en ce que**
la répartition de signaux (15) est réalisée sous forme de bobine (151), les deux parties de réception (11, 12) étant disposées sur différentes prises (1521, ... 1529) de la bobine (151), et la taille de la répartition de signaux est commandée en reliant l'antenne (10) à un branchement défini, parmi plusieurs, de la bobine (151), qui est de préférence différent des prises (1521, 1529) destinées aux parties de réception (11, 12).

11. Récepteur radio (1) selon l'une quelconque des revendications 1 à 8,
**caractérisé en ce que**
la répartition de signaux (15) est réalisée sous forme de bobine (151), l'antenne (10) et les deux parties de réception (11, 12) étant disposées sur différentes prises (1525, 1521, 1526, 1527, 1528, 1529) de la bobine (151), et la taille de la répartition de signaux est commandée en reliant l'une des deux parties de réception (12) à un branchement défini, parmi plusieurs (1526, 1527, 1528, 1529), de la bobine (151), qui est de préférence différent des prises (1521, 1529) destinées à l'antenne (10) et à une première partie de réception (1525).
